(19) Europäisches Patentamt / European Patent Office / Office européen des brevets

(11) **EP 2 244 983 B1**

(12) **FASCICULE DE BREVET EUROPEEN**

(45) Date de publication et mention de la délivrance du brevet:
**20.03.2013 Bulletin 2013/12**

(21) Numéro de dépôt: **09701344.5**

(22) Date de dépôt: **06.01.2009**

(51) Int Cl.:
*C01G 25/02* [(2006.01)]   *C01G 41/02* [(2006.01)]
*B01J 21/06* [(2006.01)]   *B01J 23/30* [(2006.01)]
*C01F 17/00* [(2006.01)]

(86) Numéro de dépôt international:
**PCT/EP2009/050074**

(87) Numéro de publication internationale:
**WO 2009/087144 (16.07.2009 Gazette 2009/29)**

(54) **COMPOSITION A BASE D'OXYDE DE ZIRCONIUM, D'OXYDE D'YTTRIUM ET D'OXYDE DE TUNGSTENE, PROCEDE DE PREPARATION ET UTILISATION COMME CATALYSEUR OU SUPPORT DE CATALYSEUR**

ZUSAMMENSETZUNG AUF BASIS VON ZIRCONIUMOXID, YTTRIUMOXID UND WOLFRAMOXID, HERSTELLUNGSVERFAHREN UND VERWENDUNG ALS KATALYSATOR ODER KATALYSATORTRÄGER

COMPOSITION BASED ON ZIRCONIUM OXIDE, YTTRIUM OXIDE AND TUNGSTEN OXIDE, METHOD OF PREPARATION AND USE AS CATALYST OR CATALYST SUPPORT

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **09.01.2008 FR 0800115**

(43) Date de publication de la demande:
**03.11.2010 Bulletin 2010/44**

(73) Titulaires:
- **Rhodia Opérations**
  **93306 Aubervilliers (FR)**
- **Magnesium Elektron Ltd.**
  **Salford M50 3SP (GB)**

(72) Inventeurs:
- **LARCHER, Olivier**
  **F-17180 Perigny (FR)**
- **ROHART, Emmanuel**
  **F-17220 Sainte Soulle (FR)**
- **VERDIER, Stephan**
  **F-69008 Lyon (FR)**

- **CRINIERE, Guillaume**
  **B-1050 Ixelles (BE)**
- **HARRIS, Deborah**
  **Manchester M27 QAY (GB)**
- **BRADSHAW, Heather**
  **Bury BL8 4BR (GB)**

(74) Mandataire: **Dubruc, Philippe**
**Rhodia Services**
**Direction de la Propriété Industrielle**
**40 Rue de la Haie-Coq**
**93306 Aubervilliers Cedex (FR)**

(56) Documents cités:
**EP-A- 1 403 637     WO-A-2007/093593**
**FR-A- 2 907 445**

- **NATILE ET AL: "WO3/CeO2/YSZ nanocomposite as a potential catalyst for methanol reforming" JOURNAL OF POWER SOURCES, ELSEVIER, AMSTERDAM, NL, vol. 145, no. 2, 18 août 2005 (2005-08-18), pages 644-651, XP005029534 ISSN: 0378-7753**

EP 2 244 983 B1

**Description**

La présente invention concerne une composition à base d'oxyde de zirconium, d'oxyde d'yttrium et d'oxyde de tungstène, son procédé de préparation et son utilisation comme catalyseur ou support de catalyseur.

On sait que pour être efficaces, les catalyseurs ainsi que les compositions destinées à leur servir de support, doivent présenter une surface spécifique importance. En outre, on cherche toujours des catalyseurs susceptibles de pouvoir être utilisés à des températures de plus en plus hautes et, pour cela, des catalyseurs qui présentent une stabilité améliorée de leur surface spécifique. C'est tout particulièrement le cas pour les catalyseurs ou leurs supports utilisés pour le traitement des gaz d'échappement des moteurs de véhicules automobiles.

Par ailleurs, dans un cas encore plus particulier, comme le traitement des gaz de moteurs diesel par réduction des oxydes d'azote (NOx) par l'ammoniaque ou l'urée, on a besoin d'avoir des catalyseurs présentant une certaine acidité et, là aussi, une certaine résistance à la température.

Enfin, il peut être demandé, dans certaines applications, des produits qui ne contiennent pas de silicium car on salt que dans certaines conditions le silicium peut réagir avec les métaux précieux utilisés habituellement dans les catalyseurs et détériorer ainsi les performances de ceux-ci.

EP 1 403 637 A1 décrit une composition à base d'oxydes de zirconium, de tungstène et d'yttrium utilisable comme détecteur d'ammoniac. Cette composition est préparée par un procédé qui comprend une première étape dans laquelle on forme d'abord un oxyde mixte de zirconium et d'yttrium. Dans une deuxième étape cet oxyde mixte est traité avec une solution de tungstate d'ammonium:

L'article de Natile et al. « WO3/CeO2/YSZ nanocomposite as a potential catalyst for methanol reforming » Journal of Power Sources 145 (2005) 644-651 étudie les interactions entre le méthanol et des nanocomposites à base de zircone stabilisée et d'oxydes de cérium et de tungstène. Les nanocomposites sont préparés par Imprégnation d'une zircone stabilisée.

FR 2 907 445 A1 décrit des compositions à base d'oxyde de zirconium, d'oxyde de titane et d'oxyde de tungstène.

L'objet de l'invention est de fournir des matériaux susceptibles d'être utilisés dans la fabrication de catalyseurs répondant aux besoins mentionnés plus haut.

Dans ce but, la composition selon l'invention est à base d'oxyde de zirconium, d'oxyde d'yttrium et d'oxyde de tungstène. Ces oxydes sont présents dans la composition dans les proportions massiques suivantes :

- oxyde d'yttrium : 1% à 20%;
- oxyde de tungstène : 1% à 30%;

le complément en oxyde de zirconium;
et la composition est caractérisée en ce qu'elle présente une surface spécifique d'au moins 20 m$^2$/g après calcination à 900°C, 4 heures.

D'autres caractéristiques, détails et avantages de l'invention apparaîtront encore plus complètement à la lecture de la description qui va suivre, ainsi que d'un exemple concret mais non limitatif destiné à l'illustrer.

Pour la suite de la description, on entend par surface spécifique, la surface spécifique B.E.T. déterminée par adsorption d'azote conformément à la norme ASTM D 3663-78 établie à partir de la méthode BRUNAUER-EMMETT-TELLER décrite dans le périodique "The Journal of the American Chemical Society, 60, 309 (1938)".

Les calcinations à l'issue desquelles sont données les valeurs de surface sont des calcinations sous air.

Les valeurs de surface spécifiques qui sont indiquées pour une température et une durée données correspondent, sauf indication contraire, à des calcinations sous air à un palier de température sur la durée indiqué.

Les teneurs sont données en masse et en oxyde sauf indication contraire.

On précise aussi pour la suite de la description que, sauf indication contraire, dans les fourchettes de valeurs qui sont données, les valeurs aux bornes sont incluses.

La composition selon l'invention se caractérise d'abord par la nature de ses constituants. Comme cela a été indiqué plus haut cette composition est à base d'oxyde de zirconium et elle comprend en outre des oxydes d'yttrium et de tungstène dans les proportions qui ont été données plus haut

La teneur en oxyde d'yttrium peut être plus particulièrement comprise entre 5% et 15% et celle en oxyde de tungstène entre 5% et 20%.

Selon différentes variantes les compositions de l'invention peuvent ne contenir que les seuls oxydes de zirconium, d'yttrium et de tungstène mais aussi, elles peuvent contenir en outre au moins un oxyde d'une terre rare autre que le cérium. Par terre rare on entend ici les éléments du groupe constitué par les éléments de la classification périodique de numéro atomique compris inclusivement entre 57 et 71. Cette terre rare peut être plus particulièrement le lanthane, le praséodyme, le néodyme, ces élément pouvant en outre être présents en combinaison.

Dans le cas de la présence dans la composition d'une terre rare autre que le cérium, les quantités d'yttrium et de tungstène sont les mêmes que celles données plus haut, la quantité de terre rare peut alors être comprise entre 1 et 10%, plus particulièrement entre 2 et 7%, le complément étant en oxyde de zirconium. La présence d'une terre rare dans la composition a pour effet de stabiliser sa surface spécifique à température élevée.

Une autre caractéristique additionnelle des compositions de l'invention est leur surface spécifique. Celle-ci peut être d'au moins 40 m$^2$/g, plus particulièrement d'au moins 60 m$^2$/g et encore plus particulièrement d'au moins 70 m$^2$/g après calcination à 700°C, 4 heures. Des surfaces allant jusqu'à au moins environ 90 à 120 m$^2$/g peuvent être obtenues pour ces conditions de calcination, la surface étant généralement d'autant plus élevée que la teneur en tungstène de la composition est faible.

En outre, après calcination à 900°C, 4 heures, cette surface peut être d'au moins 20 m$^2$/g et encore plus particulièremertt d'au moins 26 m$^2$/g ou encore d'au moins 29 m$^2$/g.

Une autre caractéristique intéressante des compositions de l'invention est leur acidité. Cette acidité est mesurée par le test au méthylbutynol, qui sera décrit plus loin, et elle est d'au moins 90% et, plus particulièrement, elle peut être d'au moins 95%. Cette acidité peut aussi être évaluée par l'activité acide qui est aussi mesurée à partir du test au méthylbutynol et qui caractérise une acidité du produit indépendamment de sa surface.

Cette activité acide est d'au moins 0,03 mmol/h/m$^2$, plus particulièrement d'au moins 0,075 mmol/h/m$^2$. Elle peut être plus particulièrement encore d'au moins 0,1 mmol/h/m$^2$ et notamment d'au moins 0,15 mmol/h/m$^2$, ces valeurs étant données pour une composition ayant subi une calcination à 700°C 4 heures.

Les compositions de l'invention peuvent se présenter sous la forme d'un mélange de phases cristallographiques dans lequel la phase majoritaire est celle d'un oxyde de zirconium cristallisé dans le système tétragonal ou cubique.

Selon un mode de réalisation particulier les compositions de l'invention peuvent se présenter sous la forme de solutions solides des éléments yttrium et tungstène dans l'oxyde de zirconium.

Dans ce cas, les diagrammes en diffraction RX de ces compositions révèlent l'existence d'une phase unique et correspondant à celle d'un oxyde de zirconium cristallisé dans le système tétragonal ou cubique, traduisant ainsi l'incorporation des éléments yttrium et tungstène dans le réseau cristallin de l'oxyde de zirconium, et donc l'obtention d'une solution solide vraie. Les teneurs élevées en yttrium favorisent généralement l'apparition de la phase cubique. Ce mode de réalisation, solution solide, s'applique à des compositions qui ont subi une calcination à 700°C, 4 heures. Ceci signifie qu'après calcination dans ces conditions on n'observe pas de démixtion, c'est-à-dire l'apparition d'autres phases.

Les compositions de l'invention peuvent présenter en outre une teneur en sulfate qui peut être très faible. Cette teneur peut être d'au plus 800 ppm, plus particulièrement d'au plus 500 ppm, encore plus particulièrement d'au plus 100 ppm, cette teneur étant exprimée en masse de SO$_4$ par rapport à l'ensemble de la composition et mesurée par un appareil de type LECO ou ELTRA c'est-à-dire par une technique mettant en oeuvre une oxydation catalytique du produit en four à induction et une analyse IR du SO$_2$ formé.

Par ailleurs, les compositions de l'invention peuvent présenter aussi une teneur en chlore qui peut être très faible. Cette teneur peut être d'au plus 500 ppm, notamment d'au plus 200 ppm, plus précisément d'au plus 100 ppm, plus particulièrement d'au plus 50 ppm et encore plus particulièrement d'au plus 10 ppm. Cette teneur est exprimée en masse de Cl par rapport à l'ensemble de la composition.

Enfin, les compositions de l'invention peuvent présenter aussi une teneur en élément alcalin, notamment en sodium, d'au plus 500 ppm, notamment d'au plus 200 ppm, plus particulièrement d'au plus 100 ppm, encore plus particulièrement d'au plus 50 ppm. Cette teneur est exprimée en masse d'élément, par exemple masse de Na, par rapport à l'ensemble de la composition.

Ces teneurs en chlore et alcalin sont mesurées par la technique de chromatographie ionique.

Le procédé de préparation des compositions de l'invention va maintenant être décrit.

Ce procédé est caractérisé en ce qu'il comprend les étapes suivantes :

- (a) on met en présence un composé du zirconium, un composé de l'yttrium, éventuellement un composé d'une terre rare autre que le cérium, et un composé basique dans un milieu liquide ce par quoi on obtient un précipité;
- (b) éventuellement on sépare, on lave et on remet en suspension ledit précipité;
- (c) on ajoute au milieu issu de l'étape (a) ou de l'étape (b) un composé de tungstène et un acide de manière à amener le pH du milieu formé à une valeur comprise entre 2 et 7;
- (d) éventuellement on lave, après séparation du milieu de précipitation, le précipité issu de l'étape précédente;
- (e) on calcine le précipité issu de l'étape (c) ou (d).

Les différentes étapes ci-dessus vont être décrites plus en détail.

La première étape du procédé consiste à mettre en présence dans le milieu liquide un composé du zirconium et un composé de l'yttrium. Ces composés sont présents dans les proportions stoechiométriques nécessaires pour obtenir la composition finale désirée. Dans le cas de la préparation d'une composition comprenant une terre rare selon la variante décrite plus haut, un composé de cette terre rare est aussi utilisé dans cette première étape.

Le milieu liquide comporte en outre un composé basique.

Le milieu liquide est généralement l'eau.

Les composés sont de préférence des composés solubles. Le composé du zirconium peut être un nitrate qui peut avoir été obtenu par exemple par attaque à l'acide nitrique d'un hydroxyde de zirconium. Ce peut être aussi un chlorure ou un sulfate. Selon une variante particulière on utilise un oxychlorure de zirconium.

Pour le composé de l'yttrium ou de la terre rare on peut utiliser des sels inorganiques ou organiques de ces éléments. On peut mentionner le chlorure ou l'acétate et, plus particulièrement, le nitrate.

Comme composé basique on peut utiliser les produits du type hydroxyde ou carbonate. On peut citer les hydroxydes d'alcalins ou d'alcalino-terreux et l'ammoniaque. On peut aussi utiliser les amines secondaires, tertiaires ou quaternaires. On peut aussi mentionner l'urée.

Il est possible d'effectuer cette étape (a) du procédé en présence d'additifs destinés à faciliter la mise en oeuvre de celui-ci, notamment pour faciliter le traitement ultérieur du précipité. Ces additifs peuvent être choisis parmi les composés de type sulfate, les phosphates ou les polycarboxylates.

Comme composé de type sulfate, on entend tout composé comprenant l'anion $SO_4^{2-}$ ou susceptible de produire cet anion. Ce composé peut être l'acide sulfurique, le sulfate d'ammonium, un sulfate alcalin, de sodium ou de potassium notamment.

La mise en présence des différents composés peut se faire de manière quelconque. On peut ainsi introduire le composé de l'yttrium avec le composé du zirconium dans un réacteur contenant en pieds de cuve le composé basique et le composé sulfate.

Cette première étape est généralement conduite à la température ambiante (15 - 35°C).

On obtient à l'issue de l'étape (a) un précipité solide.

Le procédé comprend ensuite une étape optionnelle (b) dans laquelle le précipité peut être séparé de son milieu par toute technique classique de séparation solide-liquide telle que par exemple filtration, décantation, essorage ou centrifugation. Le produit est soumis à un ou plusieurs lavages, à l'eau ou avec des solutions aqueuses acides ou basiques. A l'issue de ce lavage, le précipité est remis en suspension dans l'eau et l'étape suivant (c) du procédé est mise en oeuvre.

Cette étape (c) consiste à ajouter au milieu issu de l'étape précédente (étape (a) ou (b) si celle-ci a été mise en oeuvre) un composé de tungstène. Ce composé peut être un sel inorganique comme le métatungstate d'ammonium $(NH_4)_6W_{12}O_{41}$ et le métatungstate de sodium $Na_2WO_4$ notamment. Par ailleurs, on ajoute aussi un acide de manière à amener le pH du milieu formé à une valeur comprise entre 2 et 7, plus particulièrement entre 4 et 6. Cet acide peut être un acide inorganique comme l'acide nitrique.

Le procédé comporte ensuite une étape (d) qui est éventuelle. Cette étape consiste à séparer le précipité obtenu à l'étape précédente de son milieu de précipitation de la même manière que décrite plus haut pour l'étape (b) puis à laver une ou plusieurs fois le précipité ainsi obtenu.

On notera que selon un mode de réalisation préféré, le procédé comporte au moins une étape de lavage (b) ou (d) et encore plus préférentiellement ces deux étapes, notamment dans le cas où l'on cherche à obtenir des compositions à teneurs faibles en sulfate, chlore ou alcalin.

La dernière étape du procédé est une calcination du précipité issu de l'étape (c) ou (d), cette calcination étant éventuellement précédée d'un séchage. Cette calcination permet de développer la cristallinité du produit formé et elle peut être également ajustée en fonction de la température d'utilisation ultérieure réservée à la composition, et ceci en tenant compte du fait que la surface spécifique du produit est d'autant plus faible que la température de calcination mise en oeuvre est plus élevée. Une telle calcination est généralement opérée sous air.

En pratique, on limite généralement la température de calcination à un intervalle de valeurs comprises entre 500°C et 900°C, plus particulièrement entre 700°C et 900°C.

La durée de cette calcination peut varier dans de larges limites, elle est en principe d'autant plus grande que la température est basse. A titre d'exemple uniquement, cette durée peut varier entre 2 heures et 10 heures.

Les compositions de l'invention telles que décrites plus haut ou telles qu'obtenues par le procédé décrit précédemment se présentent sous forme de poudres mais elles peuvent éventuellement être mises en forme pour se présenter sous forme de granulés, billes, cylindres, monolithes ou filtres sous forme de nids d'abeille de dimensions variables. Ces compositions peuvent être appliquées sur tout support utilisé habituellement dans le domaine de la catalyse, c'est à dire notamment des supports inertes thermiquement. Ce support peut être choisi parmi l'alumine, l'oxyde de titane, l'oxyde de cérium, l'oxyde de zirconium, la silice, les spinelles, les zéolites, les silicates, les phosphates de silicoaluminium cristallins, les phosphates d'aluminium cristallins.

Les compositions peuvent aussi être utilisées dans des systèmes catalytiques. L'invention concerne donc aussi des systèmes catalytiques contenant des compositions de l'invention. Ces systèmes catalytiques peuvent comprendre un revêtement (wash coat) à propriétés catalytiques et à base de ces compositions, sur un substrat du type par exemple monolithe métallique ou en céramique. Le revêtement peut comporter lui aussi un support du type de ceux mentionnés plus haut. Ce revêtement est obtenu par mélange de la composition avec le support de manière à former une suspension qui peut être ensuite déposée sur le substrat.

Dans le cas de ces utilisations dans des systèmes catalytiques, les compositions de l'invention peuvent être employées en combinaison avec des métaux de transition; elles jouent ainsi le rôle de support pour ces métaux. Par métaux de transition, on entend les éléments des groupes IIIA à IIB de la classification périodique. Comme métaux de transition, on peut citer plus particulièrement le vanadium et le cuivre ainsi que les métaux précieux, comme le platine, le rhodium, le palladium, l'argent ou l'iridium. La nature de ces métaux et les techniques d'incorporation de ceux-ci dans les compositions supports sont bien connues de l'homme du métier. Par exemple, les métaux peuvent être incorporés aux compositions par imprégnation.

Les systèmes de l'invention peuvent être utilisés dans le traitement de gaz. Ils peuvent agir dans ce cas comme catalyseur d'oxydation du CO et des hydrocarbures contenus dans ces gaz ou encore comme catalyseur de réduction des oxydes d'azote (NOx) dans la réaction de réduction de ces NOx par l'ammoniaque ou l'urée et, dans ce cas, en tant que catalyseur pour la réaction d'hydrolyse ou de décomposition de l'urée en ammoniaque (Procédé SCR).

Les gaz susceptibles d'être traités dans le cadre de la présente invention sont, par exemple, ceux émis par des installations fixes comme les turbines à gaz, les chaudières de centrales thermiques. Ce peut être aussi les gaz issus des moteurs à combustion interne et tout particulièrement les gaz d'échappement des moteurs diesel

Dans le cas de l'utilisation en catalyse de la réaction de réduction des NOx par l'ammoniaque ou l'urée, les compositions de l'invention peuvent être employées en combinaison avec du cérium ou avec des métaux du type métaux de transition comme le vanadium ou le cuivre.

Un exemple va maintenant être donné.

On décrit tout d'abord ci-dessous le test au méthylbutynol utilisé pour caractériser l'acidité des compositions selon l'invention.

Ce test catalytique est décrit par Pernot et al. dans Applied Catalysis, 1991, vol 78, p 213 et utilise le 2-méthyl-3-butyn-2-ol (méthylbutynol ou MBOH) comme molécule sonde de l'acido-basicité de surface des compositions préparées. En fonction de l'acido-basicité des sites de surface de la composition, le méthylbutynol peut être transformé suivant 3 réactions :

Tableau 1

| Réaction | Produits de réaction |
|---|---|
| Acide | 2-méthyl-1-butèn-3-yne + 3-méthyl-2-butènal |
| Amphotère | 3-hydroxy-3-méthyl-2-butanone + 3-méthyl-3-butèn-2-one |
| Basique | Acétone + Acétylène |

Expérimentalement, une quantité (m) d'environ 400 mg de composition est placée dans un réacteur en quartz. La composition subit d'abord un prétraitement à 400°C pendant 2h sous un flux gazeux de $N_2$ à un débit de 4 L/h.

La température de la composition est ensuite ramenée à 180°C. On met alors en contact de manière périodique la composition avec des quantités données de MBOH. Cette mise en contact périodique consiste à faire circuler au cours d'une injection de 4 minutes un mélange synthétique de 4 %vol de MBOH dans $N_2$ avec un débit de 4 L/h ce qui correspond à un débit molaire horaire de méthylbutynol (Q) de 7,1 mmol/h. On procède à 10 injections. A la fin de chaque injection, le flux gazeux en sortie de réacteur est analysé par chromatographie en phase gazeuse pour déterminer la nature des produits de la réaction (cf Tableau 1) et leur quantité.

La sélectivité ($S_i$) pour un produit i de la réaction de transformation du méthylbutynol est définie par la proportion de ce produit par rapport à l'ensemble des produits formés ($S_i=C_i/\Sigma$ où $C_i$ est la quantité de produit i et E représente la somme des produits formés lors de la réaction). On définit alors une sélectivité acide, amphotère ou basique qui est égale à la somme des sélectivités des produits formés pour les réactions respectivement acide, amphotère et basique. Par exemple, la sélectivité acide (S[acide]) est égale à la somme des sélectivités en 2-méthyl-1-butèn-3-yne et en 3-méthyl-2-butènal. Ainsi, plus la sélectivité acide est élevée, plus les produits de réaction acide sont formés en quantités importantes et plus le nombre de sites acides sur la composition étudiée est élevé.

Le taux de transformation du méthybutynol (TT) au cours du test est calculé en faisant la moyenne des taux de transformation du méthylbutynol sur les 5 dernières injections du test.

On peut également définir l'activité acide (A[acide]) de la composition exprimée en mmol/h/m² à partir du taux de transformation du méthylbutynol (TT exprimé en %), du débit molaire horaire du méthylbutynol (Q exprimé en mmol/h), de la sélectivité acide (S[acide] exprimée en %), de la quantité de composition analysé (m exprimée en g) et de la surface spécifique de la composition (SBET exprimée en m²/g) selon la relation suivante :

$$A[acide]=10^{-4}.TT.Q.S[acide]/(SBET.m)$$

EXEMPLE

Cet exemple concerne la préparation d'une composition à base d'oxydes de zirconium, d'yttrium et de tungstène dans les proportions respectives en masse d'oxyde de 70%, 10% et 20%.

On prépare une solution A en mélangeant dans un bécher sous agitation 219 g de chlorure de zirconyl (20%pds ZrO2), 18 g d'acide sulfurique (97% pds) et 27 g de nitrate d'yttrium (391 g/L Y2O3) avec de 93 g d'eau permutée.

Dans un réacteur agité, on introduit 657 g de solution d'hydroxyde de sodium (10%pds NaOH) et 50 g d'eau permutée. Puis on ajoute progressivement sous agitation la solution A. Le pH du milieu atteint une valeur d'au moins 12,5 en ajoutant ensuite une solution d'hydroxyde de sodium. Le précipité obtenu est filtré et lavé à 60°C avec 3 L d'eau permutée. Le solide est remis en suspension et on complète à 714 g avec de l'eau permutée.

On prépare une solution B en mélangeant 17,8 g de métatungstate de sodium dihydrate et 45 g d'eau permutée. Puis on ajoute progressivement sous agitation la solution B dans la suspension. Le pH est ensuite ajusté à 5,5 par addition d'une solution d'acide nitrique (68 %vol). Le précipité est à nouveau filtré et lavé à 45°C avec 3 L d'eau permutée.

Le solide est séché une nuit en étuve à 120°C puis le produit obtenu est calciné sous air à 700°C pendant 4 heures en palier. Ce produit est caractérisé par une surface spécifique de 68 $m^2$/g et une phase tétragonale pure. Après calcination sous air à 900°C pendant 4 heures en palier, la surface spécifique est égale à 29 $m^2$/g.

Le produit contient 50 ppm de sodium, moins de 10 ppm de chlorures et moins de 120 ppm de sulfates.

Dans le test méthylbutynol, le produit calciné à 700°C/4h présente une sélectivité acide de 97% ainsi qu'une activité acide de 0,171 mmol/$m^2$/h.


**Revendications**

1. Composition à base d'oxyde de zirconium, d'oxyde d'yttrium et d'oxyde de tungstène dans les proportions massiques suivantes :

    - oxyde d'yttrium : 1% à 20%;
    - oxyde de tungstène : 1% à 30%;

    le complément en oxyde de zirconium;
    **caractérisée en ce qu'**elle présente une surface spécifique d'au moins 20 $m^2$/g après calcination à 900°C, 4 heures.

2. Composition selon la revendication 1, **caractérisée en ce qu'**elle présente une teneur en oxyde d'yttrium comprise entre 5% et 15%.

3. Composition selon l'une des revendications précédentes, **caractérisée en ce qu'**elle présente une teneur en oxyde de tungstène comprise entre 5% et 20%.

4. Composition selon l'une des revendications précédentes, **caractérisée en ce qu'**elle présente une surface spécifique d'au moins 40 $m^2$/g après calcination à 700°C, 4 heures.

5. Composition selon l'une des revendications 1 à 3, **caractérisée en ce qu'**elle présente une surface spécifique d'au moins 70 $m^2$/g après calcination à 700°C, 4 heures.

6. Composition selon l'une des revendications 1 à 5, **caractérisée en ce qu'**elle présente une acidité mesurée par le test au méthylbutynol d'au moins 90%.

7. Composition selon l'une des revendications précédentes **caractérisée en ce qu'**elle comprend en outre un oxyde d'une terre rare autre que le cérium dans une proportion comprise entre 1 et 10%, plus particulièrement entre 2 et 7%.

8. Procédé de préparation d'une composition selon l'une des revendications 1 à 7, **caractérisé en ce qu'**il comprend les étapes suivantes :

    - (a) on met en présence un composé du zirconium, un composé de l'yttrium, éventuellement un composé d'une terre rare autre que le cérium, et un composé basique dans un milieu liquide ce par quoi on obtient un précipité;
    - (b) éventuellement on sépare, on lave et on remet en suspension ledit précipité;
    - (c) on ajoute au milieu issu de l'étape (a) ou de l'étape (b) un composé de tungstène et un acide de manière à amener le pH du milieu formé à une valeur comprise entre 2 et 7;

- (d) éventuellement on lave, après séparation du milieu de précipitation, le précipité issu de l'étape précédente;
- (e) on calcine le précipité issu de l'étape (c) ou (d).

9. Procédé selon la revendication 8, **caractérisé en ce que** le composé du zirconium est un oxychlorure de zirconium.

10. Procédé selon la revendication 8 ou 9, **caractérisé en ce que** l'étape (a) est effectuée en présence d'un additif choisis parmi des composés de type sulfate, les phosphates ou les polycarboxylates.

11. Système catalytique, **caractérisé en ce qu'**il comprend une composition selon l'une des revendications 1 à 7.

12. Procédé de traitement de gaz, plus particulièrement des gaz d'échappement d'un moteur diesel, **caractérisé en ce qu'**on utilise comme catalyseur d'oxydation du CO et des hydrocarbures contenus dans les gaz une composition selon l'une des revendications 1 à 7 ou un système catalytique selon la revendication 11.

13. Procédé de traitement des gaz d'échappement d'un moteur diesel, **caractérisé en ce qu'**on utilise comme catalyseur de réduction des oxydes d'azote (NOx) dans la réaction de réduction de ces NOx par l'ammoniaque ou l'urée une composition selon l'une des revendications 1 à 7 ou un système catalytique selon la revendication 11.

**Claims**

1. Composition based on zirconium oxide, yttrium oxide and tungsten oxide in the following proportions by mass:

   - yttrium oxide: 1% to 20%;
   - tungsten oxide: 1% to 30%;

   the remainder being zirconium oxide;
   **characterized in that** it has a specific surface area of at least 20 $m^2$/g after calcination at 900°C for 4 hours.

2. Composition according to Claim 1, **characterized in that** it has an yttrium oxide content of between 5% and 15%.

3. Composition according to either of the preceding claims, **characterized in that** is has a tungsten oxide content of between 5% and 20%.

4. Composition according to one of the preceding claims, **characterized in that** it has a specific surface area of at least 40 $m^2$/g after calcination at 700°C for 4 hours.

5. Composition according to one of Claims 1 to 3, **characterized in that** it has a specific surface area of at least 70 $m^2$/g after calcination at 700°C for 4 hours.

6. Composition according to one of Claims 1 to 5, **characterized in that** it has an acidity measured by the methylbutynol test of at least 90%.

7. Composition according to one of the preceding claims, **characterized in that** it also comprises an oxide of a rare earth element other than cerium in a proportion of between 1% and 10%, more particularly between 2% and 7%.

8. Process for preparing a composition according to one of Claims 1 to 7, **characterized in that** it comprises the following steps:

   - (a) a zirconium compound, an yttrium compound, optionally a compound of a rare earth element other than cerium, and a basic compound are brought together in a liquid medium, whereby a precipitate is obtained;
   - (b) optionally, said precipitate is separated, washed and resuspended;
   - (c) a tungsten compound is added to the medium derived from step (a) or from step (b), as is an acid so as to bring the pH of the medium formed to a value of between 2 and 7;
   - (d) optionally, the precipitate derived from the preceding step is washed, after separation from the precipitation medium;
   - (e) the precipitate derived from step (c) or (d) is calcined.

9. Process according to Claim 8, **characterized in that** the zirconium compound is a zirconium oxychloride.

10. Process according to Claim 8 or 9, **characterized in that** step (a) is carried out in the presence of an additive chosen from compounds of sulphate type, phosphates or polycarboxylates.

11. Catalytic system, **characterized in that** it comprises a composition according to one of Claims 1 to 7.

12. Process for treating gases, more particularly exhaust gases from a diesel engine, **characterized in that** a composition according to one of Claims 1 to 7 or a catalytic system according to Claim 11 is used as catalyst for the oxidation of the CO and the hydrocarbons present in the gases.

13. Process for treating exhaust gases from a diesel engine, **characterized in that** a composition according to one of Claims 1 to 7 or a catalytic system according to Claim 11 is used as catalyst for the reduction of nitrogen oxides (NOx) in the reaction for the reduction of these NOx with aqueous ammonia or urea.


**Patentansprüche**

1. Zusammensetzung auf Basis von Zirconiumoxid, Yttriumoxid und Wolframoxid in den folgenden Massenanteilen:

   - Yttriumoxid: 1% bis 20%;
   - Wolframoxid: 1% bis 30%;

   Rest Zirconiumoxid;
   **dadurch gekennzeichnet, dass** sie nach 4 Stunden Calcinierung bei 900°C eine spezifische Oberfläche von mindestens 20 m$^2$/g aufweist.

2. Zusammensetzung nach Anspruch 1, **dadurch gekennzeichnet, dass** sie einen Yttriumoxidgehalt zwischen 5% und 15% aufweist.

3. Zusammensetzung nach einem der vorhergehenden Ansprüche, **dadurch gekennzeichnet, dass** sie einen Wolframoxidgehalt zwischen 5% und 20% aufweist.

4. Zusammensetzung nach einem der vorhergehenden Ansprüche, **dadurch gekennzeichnet, dass** sie nach 4 Stunden Calcinierung bei 700°C eine spezifische Oberfläche von mindestens 40 m$^2$/g aufweist.

5. Zusammensetzung nach einem der Ansprüche 1 bis 3, **dadurch gekennzeichnet, dass** sie nach 4 Stunden Calcinierung bei 700°C eine spezifische Oberfläche von mindestens 70 m$^2$/g aufweist.

6. Zusammensetzung nach einem der Ansprüche 1 bis 5, **dadurch gekennzeichnet, dass** sie eine mit Hilfe des Methylbutinol-Tests gemessene Acidität von mindestens 90% aufweist.

7. Zusammensetzung nach einem der vorhergehenden Ansprüche, **dadurch gekennzeichnet, dass** sie außerdem ein Oxid eines Seltenerdmetalls, das von Cer verschieden ist, in einem Anteil zwischen 1 und 10%, insbesondere zwischen 2 und 7%, aufweist.

8. Verfahren zur Herstellung einer Zusammensetzung nach einem der Ansprüche 1 bis 7, **dadurch gekennzeichnet, dass** man:

   - (a) eine Zirconiumverbindung, eine Yttriumverbindung, gegebenenfalls eine Verbindung eines Seltenerdmetalls, das von Cer verschieden ist, und eine basische Verbindung in einem flüssigen Medium zusammengibt, wodurch man einen Niederschlag erhält;
   - (b) den Niederschlag gegebenenfalls abtrennt, wäscht und resuspendiert;
   - (c) zu dem Medium aus Schritt (a) bzw. Schritt (b) eine Wolframverbindung und eine Säure so zugibt, dass der pH-Wert des gebildeten Mediums auf einen Wert zwischen 2 und 7 gebracht wird;
   - (d) den Niederschlag aus dem vorhergehenden Schritt gegebenenfalls nach Abtrennung von dem Fällungsmedium wäscht;
   - (e) den Niederschlag aus Schritt (c) bzw. (d) calciniert.

9.  Verfahren nach Anspruch 8, **dadurch gekennzeichnet, dass** es sich bei der Zirconiumverbindung um ein Zirconiumoxidchlorid handelt.

10. Verfahren nach Anspruch 8 oder 9, **dadurch gekennzeichnet, dass** man Schritt (a) in Gegenwart eines unter Verbindungen vom Sulfat-Typ, Phosphaten oder Polycarboxylaten ausgewählten Zusatzstoffs durchführt.

11. Katalytisches System, **dadurch gekennzeichnet, dass** es eine Zusammensetzung nach einem der Ansprüche 1 bis 7 umfasst.

12. Verfahren zur Behandlung von Gasen, insbesondere Abgasen eines Dieselmotors, **dadurch gekennzeichnet, dass** man als Katalysator für die Oxidation des CO und der Kohlenwasserstoffe in den Gasen eine Zusammensetzung nach einem der Ansprüche 1 bis 7 oder ein katalytisches System nach Anspruch 11 verwendet.

13. Verfahren zur Behandlung von Abgasen eines Dieselmotors, **dadurch gekennzeichnet, dass** man als Katalysator für die Reduktion der Stickstoffoxide (NOx) bei der Reduktionsreaktion dieser NOx mit wässrigem Ammoniak oder Harnstoff eine Zusammensetzung nach einem der Ansprüche 1 bis 7 oder ein katalytisches System nach Anspruch 11 verwendet.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1403637 A1

- FR 2907445 A1

**Littérature non-brevet citée dans la description**

- **NATILE et al.** WO3/CeO2/YSZ nanocomposite as a potential catalyst for methanol reforming. *Journal of Power Sources,* 2005, vol. 145, 644-651

- **BRUNAUER-EMMETT-TELLER.** *The Journal of the American Chemical Society,* 1938, vol. 60, 309
- **PERNOT et al.** *Applied Catalysis,* 1991, vol. 78, 213